# EUROPEAN PATENT APPLICATION

(11) **EP 1 791 361 A1**
(43) Date of publication of application: **30.05.2007**
(21) Application number: 05782214.0
(22) Date of filing: 06.09.2005
(51) Int. Cl.: H04N 7/173, G06F 12/14, G06F 15/00, H04N 5/44

(54) **CONTENT DISTRIBUTION MANAGEMENT DEVICE**

(30) Priority: 07.09.2004 JP 2004259214
(71) Applicant: MATSUSHITA ELECTRIC INDUSTRIAL CO., LTD., Osaka 571-8501 (JP)
(72) Inventor: TAKATSUJI, Ayako c/o Matsushita El. Ind. Co., Ltd., Chuo-ku, Osaka-shi, Osaka 540-6319 (JP); IITSUKA, Hiroyuki c/o Matsushita El. Ind. Co., Ltd., Chuo-ku, Osaka-shi, Osaka 540-6319 (JP); USUKI, Naoshi c/o Matsushita El. Ind. Co., Ltd., Chuo-ku, Osaka-shi, Osaka 540-6319 (JP)
(74) Representative: Pautex Schneider, Nicole Véronique
(86) International application number: PCT/JP2005/016333
(87) International publication number: WO 2006/028092

(57) **Abstract**

The present invention provides a content distribution management device that manages content distribution for a receiver which is permitted to share a content stored in a transmitter.

The content distribution management device is a content distribution management device that manages content distribution in the case where a transmitter distributes a content to a plurality of receivers, the content distribution management device including a registration information/counter changing unit (205) which sets, in a registration information/counter holding unit (203), a valid reception period which is a maximum length of time for which the receivers can receive the content, the receivers being permitted to share the content, and the registration information/counter changing unit (205) manages, in accordance with a status of distribution of the content from the transmitter, a length of time for which all the receivers permitted to share the content can receive the content.

## Description

### Technical Field

The present invention relates to a content distribution management device for managing content distribution by a transmitter.

### Background Art

Recently, a home network in which appliances at home are connected via a network to share various contents are being implemented. One of the forms in which a home network is implemented is to provide a router at home, and have the router connected with appliances, such as TVs and VCRs (hereinafter referred to as receivers), and a transmitter, such as a DVD recorder, in which a content is stored, to form a star topology. Here, it is assumed that only the router is connected to a network outside the home. The transmitter has a function to distribute the stored content to a receiver in response to a request from the receiver. Consequently, each receiver is permitted to share various contents stored in the transmitter.

However, from the viewpoint of copyright protection, unlimited sharing of contents is unacceptable. Therefore, limitations need to be placed on contents permitted for sharing among receivers at home so that the contents cannot be distributed to a receiver outside the home. For this purpose, when there is a request from a receiver for content distribution, the transmitter needs to judge whether or not the receiver is a receiver at home which is permitted to share the content.

For example, as the judging method for the Digital Transmission Content Protection Specification (DTCP specification) licensed by Digital Transmission Licensing Administrator (DTLA), use of a method of testing whether or not the length of time required for communication between a transmitter and a receiver is less than a predetermined period is being explored (refer to Non-Patent Reference 1). Non-Patent Reference 1: Work Plan for Localizing Transmission, September 9, 2003.

### Disclosure of Invention

### Problems that Invention is to Solve

Nonetheless, a concrete method of managing content distribution to a receiver which is judged to be a home receiver and permitted to share the content stored in the transmitter is yet to be devised. From the viewpoint of copyright protection, it is necessary to prevent the transmitter from unlimitedly distributing a content to a receiver even if, for example, the receiver is judged to be a home receiver.

An object of the present invention is to provide a content distribution management device for managing content distribution to a receiver which is permitted to share contents stored in a transmitter.

### Means to Solve the Problems

In order to achieve the above mentioned object, the content distribution management device of the present invention is a content distribution management device that manages content distribution in the case where a transmitter distributes a content to a plurality of receivers, the content distribution management device including: a setting unit which sets, in a holding unit, a valid reception period which is a maximum length of time for which the receivers can receive the content, the receivers being permitted to share the content; and a management unit which manages, in accordance with a status of distribution of the content from the transmitter, a length of time for which all the receivers permitted to share the content can receive the content.

For example, a unique identifier is assigned to each of the receivers, and the content distribution management device further includes a registration unit which stores, in the holding unit, the identifier of each of the receivers permitted to share the content which the transmitter distributes, in which the setting unit sets the valid reception period in the holding unit in the case where the registration unit has stored the identifier of each of the receivers in the holding unit, and the management unit deletes the identifier registered in the holding unit in the case where a length of time for which the content is distributed has reached the end of the valid reception period after the valid reception period has been set in the holding unit, the content being distributed by the transmitter.

For example, the length of time for which distribution is performed is an actual length of time for which the transmitter distributes the content, and the management unit reduces, from the length of time for which the receivers can receive the content, the actual length of time for which the transmitter distributes the content.

For example, the length of time for which distribution is performed is a length of time for which the content is reproduced, the content being distributed by the transmitter, and the management unit reduces, from the length of time for which the receivers can receive the content, the length of time for which the content is reproduced, the content being distributed by the transmitter.

For example, the transmitter distributes the content in an encrypted form, each of the receivers permitted to share the content is a receiver, a connection status of which meets a predetermined relationship with the transmitter, the setting unit sets, in the holding unit, the identifier of each of the receivers, the connection status of which meets the predetermined relationship with the transmitter, and the transmitter transmits, to each of the receivers associated with the identifier, information necessary for decrypting the encrypted content after the identifier has been set in the holding unit.

In addition, the content distribution management device of the present invention is a content distribution management device that manages content distribution in the case where a transmitter distributes a content to one or more receivers, in which a unique identifier is assigned to each of the one or more receivers, the device including: a registration unit which stores, in a holding unit, the identifier of each of the one or more receivers permitted to share the content included in the transmitter; a setting unit which sets, in the holding unit, a valid reception period which is a maximum length of time for which the one or more receivers can receive the content in the case where the registration unit has stored, in the holding unit, the identifier of each of the one or more receivers; and a management unit which deletes the identifier registered in the holding unit in the case where a length of time for which the content is distributed has reached the end of the valid reception period after the valid reception period has been set in the holding unit, the content being distributed by the transmitter.

For example, the length of time for which distribution is performed is an actual length of time for which the transmitter distributes the content, and the management unit reduces, from the length of time for which the one or more receivers can receive the content, the actual length of time for which the transmitter distributes the content.

For example, the length of time for which distribution is performed is a length of time for which the content is reproduced, the content being distributed by the transmitter, and the management unit reduces, from the length of time for which the one or more receivers can receive the content, the length of time for which the content is reproduced, the content being distributed by the transmitter.

For example, the transmitter distributes the content in an encrypted form, each of the one or more receivers permitted to share the content is a receiver, a connection status of which meets a predetermined relationship with the transmitter, the setting unit sets, in the holding unit, the identifier of each of the one or more receivers, the connection status of which meets the predetermined relationship with the transmitter, and the transmitter transmits, to each of the one or more receivers associated with the identifier, information necessary for decrypting the encrypted content after the identifier has been set in the holding unit.

The present invention may be embodied as a content distribution management method in which the characteristic constituent units of the content distribution management device of the present invention serve as steps, and may also be embodied as a program which causes a computer to execute such steps. Such a program may be distributed on a recording medium such as a CD-ROM or on a transmission medium such as a communication network.

### Effects of the Invention

The present invention is capable of providing a content distribution management device for managing content distribution to a receiver permitted to share contents stored in a distributing device.

The content distribution management device of the present invention facilitates the management by collectively managing content distribution statuses of receivers without having to be aware of the distribution status of each receiver individually. At the same time, the content distribution management device of the present invention reliably prevents unlimited sharing of the contents. Moreover, by skipping a time-consuming judging process of judging a connection status of a receiver in a registered status, it is possible to achieve both security protection of contents and a reduction in load in a permission judging process. In addition, the length of time that a receiver can receive a content is measured, for example, in accordance with only the length of time for which the transmitter distributes a content. Therefore, after the receiver is given permission to share contents, even a blank time caused by the user having to suspend the viewing of the content in mid-flow (for example, by an unexpected visitor) is not consumed. Consequently, there is an advantage to reduce the frequency of obtaining permission again from the transmitter.

Here, by having only one counter to manage the lengths of time for which plural receivers can respectively receive contents, the transmitter can manage distribution of contents with few resources, and thus the implementation is facilitated.

Also, the lengths of time for which the receivers can receive contents are managed by the counter per receiver, and at the point in time when each receiver is registered, the value of the counter is initialized to a predetermined value individually. Therefore, there is an advantage to prevent the case where the initial value of a receiver is dynamically shortened due to an influence of the distribution status of another receiver prior to the registration of the receiver. Accordingly, there is also an advantage to reduce the frequency of obtaining permission from the transmitter.

### Brief Description of Drawings

FIG. 1 shows a structure of a home network 1 according to an embodiment.
FIG. 2 shows a structure of a transmitter 20 according to the embodiment.
FIG. 3 shows procedures up to when the transmitter 20 passes an exchange key to a receiver which has made an authentication request in a first embodiment.
FIG. 4 shows procedures from the start until the end of content distribution by the transmitter 20 in the first embodiment.
FIG. 5 illustrates an example of changes in counter values held in the transmitter 20 in the first embodiment, the values specifying periods for which respective receivers can receive contents.
FIG. 6 illustrates an example of changes in a counter value held in the transmitter 20 in a second embodiment, the value specifying a period for which each receiver can receive contents.

### Numerical References

- 1: Home network
- 10: Router
- 20: Transmitter
- 30: Receiver
- 31: Receiver
- 32: Receiver
- 200: Communication unit
- 201: Appliance authentication unit
- 202: Connection status verification unit
- 203: Registration information/counter holding unit
- 204: Registration judgment unit
- 205: Registration information/counter changing unit
- 206: Exchange key transmission unit
- 207: Content distribution acceptance unit
- 208: Content storage unit
- 209: Content encryption unit
- 210: Content distribution unit
- 211: Content distribution measurement unit

### Best Mode for Carrying Out the Invention

The best mode for carrying out the present invention is described below with reference to the drawings.

### (First Embodiment)

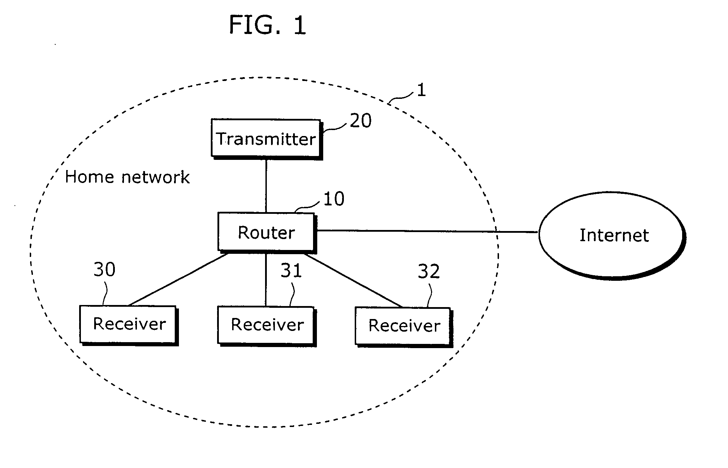

First of all, referring to FIG. 1, a structure of a home network 1 according to a first embodiment is described.

FIG. 1 shows a structure of the home network 1 according to the first embodiment.

The home network 1 is a network for enabling sharing of contents at home, and is made up of a router 10, a transmitter 20, and receivers 30, 31, and 32. The router 10 is the only one in the home network 1 which is connected with a network outside the home network 1 (Internet). The transmitter 20 and the receivers 30, 31, and 32 are connected with the router 10. The home network 1 is a star topology network having the router 10 in the center.

The transmitter 20 stores various contents, receives an authentication request from another appliance via the router 10, and judges whether or not the another appliance is an appliance in the home network 1 and is permitted to share the contents stored in the transmitter 20. In the case of judging that the another appliance is an appliance permitted to share the contents, the transmitter 20 distributes, to the another appliance, a content requested by the another appliance.

The transmitter 20 is, for example, an Audio-Visual server which has a function to distribute various contents stored.

The receivers 30, 31, and 32 are, for example, a TV, a video, and a DVD player which have a function to obtain various contents.

In the first embodiment, a receiver permitted to share the contents can receive a content from the transmitter 20 during a predetermined valid reception period. Here, the predetermined valid reception period is a predetermined reference period. The transmitter 20 has counters for specifying the periods for which respective receivers, permitted to share contents, can receive the contents. In the case where, in response to an authentication request from a receiver, the transmitter 20 judges that the receiver is a valid appliance (hereinafter referred to as "authentication"), checks whether or not a connection status between the transmitter 20 and the receiver meets a predetermined condition (hereinafter referred to as "connection status verification"), and judges that the receiver can be permitted to share the contents, the transmitter 20 registers the receiver internally as a receiver permitted to share the contents, and sets the counter of the receiver to the predetermined valid reception period. In other words, the counter for the receiver is initialized. At the point in time when the counter of the receiver indicates that the predetermined valid reception period has passed, the registration of the receiver is deleted from the transmitter 20.

A content is distributed in an encrypted form from the transmitter 20. In response to an authentication request from a receiver, the transmitter 20 performs both authentication and connection status verification in the case where the receiver is not yet registered. After registration, the transmitter 20 provides the receiver with information necessary for decrypting the encrypted content. On the other hand, in the case where the receiver has already been registered, the transmitter 20 performs only the authentication of the receiver, and provides the receiver with the information necessary for decrypting the encrypted content.

The counters for the respective receivers are decremented while the transmitter 20 distributes a content. In other words, in the case where a content is distributed to one of the registered receivers, the counters of all the receivers are equally decremented.

Here, the content is broadcast (or multicast)-distributed at a constant data rate to be reproduced in real time using, for example, a Real-Time Transport Protocol (RTP). Since contents to be distributed are encrypted, receivers cannot decrypt the encrypted contents without permission to share contents and the information necessary for decrypting the contents.

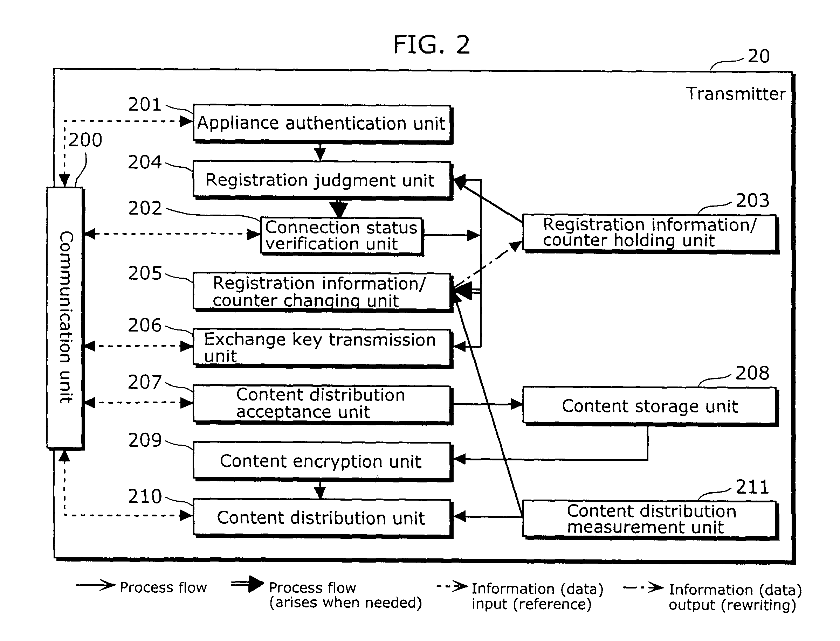

The following is a detailed description of the transmitter 20 which enables the above-described functions. Firstly, referring to FIG. 2, a structure of the transmitter 20 is described. FIG. 2 shows the structure of the transmitter 20.

The transmitter 20 includes a communication unit 200, an appliance authentication unit 201, a connection status verification unit 202, a registration information/counter holding unit 203, a registration judgment unit 204, a registration information/counter changing unit 205, an exchange key transmission unit 206, a content distribution acceptance unit 207, a content storage unit 208, a content encryption unit 209, a content distribution unit 210, and a content distribution measurement unit 211.

The communication unit 200 communicates with an appliance outside the transmitter 20. Each internal component of the transmitter 20 communicates with an appliance outside the transmitter 20 via the communication unit 200.

In response to an authentication request from a receiver, the appliance authentication unit 201 checks whether or not the receiver is a valid appliance by means of authentication. Here, as a method of the appliance authentication, a method of performing challenge-response type authentication is used. In the challenge-response type authentication, for example, the transmitter 20 and a receiver respectively hold a pair of keys for public key encryption (a public key and a secret key) and a certificate, and authentication is performed between the transmitter 20 and the receiver using the public key and the secret key.

The connection status verification unit 202 verifies whether or not a connection status of the receiver which has made an authentication request (requesting receiver) meets the predetermined condition. Here, the following method is used as an example verification method: the connection status verification unit 202 measures a round trip time from when the transmitter 20 transmits echo request data to the requesting receiver up to when the transmitter 20 receives from the requesting receiver echo response data responding to the echo request data, and judges that the requesting receiver is an appliance of the home network 1 when the round trip time is equal to or less than a predetermined reference period of time. Hereinafter, verification performed by this method is referred to as Round Trip Time (RTT) verification. The aforementioned connection status verification and the RTT verification are synonymous with each other in the embodiment.

The registration information/counter holding unit 203 holds: an identification code of the receiver for which verification results obtained by the appliance authentication unit 201 and the connection status verification unit 202 are positive; and counters which show predetermined valid reception periods. Here, the identification code is, for example, appliance-unique information (for example, a device ID) described in the certificate obtained by the appliance authentication unit 201.

The registration judgment unit 204 checks the registration information/counter holding unit 203 to judge whether or not the receiver with a positive verification result obtained by the appliance authentication unit 201 is an appliance which has already been registered.

The registration information/counter changing unit 205 changes information held in the registration information/counter holding unit 203. The term "change" includes (A) new registration/counter initialization, (B) a reflection on a counter of the length of time for which content distribution is carried out, and (C) deletion of registration (/a counter). In the change (A), an identification code of a receiver which is to be registered is stored in the registration information/counter holding unit 203, and the counter of the receiver is initialized. Here, the term "initialization" means to set a counter value to a predetermined reference value (a valid reception period is a maximum period for which a receiver can receive contents). Here, the reference value indicates a length of time, and when the valid reception period is 40 hours, an initial value of the counter is set, for example, to "40", and it is changed in one hour unit. In the change (B), every time the length of time of content distribution measured by the content distribution measurement unit 211 increases by one hour, the counter values of all the registered receivers held in the registration information/counter holding unit 203 are decremented by "1". Here, in the case where there is a counter value reaching "0", the registration of the receiver associated with the counter is deleted from the registration information/counter holding unit 203 (in other words, the identification code and the counter of the receiver associated with the counter are deleted) (C).

The exchange key transmission unit 206 transmits to a receiver in a registered status information necessary for decrypting an encrypted content. Here, the necessary information is, for example, an exchange key which is required for generating a content key used for decrypting the content. This exchange key is transmitted by the appliance authentication unit 201 using an authentication key which has been shared between the transmitter 20 and the above-described receiver in the registered status. The transmitter 20 changes the exchange key at a timing in accordance with a predetermined rule. However, the rule regarding the timing of the change is not the focus of the present invention, and therefore a description of the rule is omitted. According to the embodiment, the exchange key transmission unit 206 transmits the latest exchange key, that is, the exchange key which can be used for decrypting a content in the case where the content is currently distributed.

The content distribution acceptance unit 207 accepts a content distribution request from each receiver and responds to the request.

The content storage unit 208 stores various contents to be distributed.

The content encryption unit 209 encrypts a content to be distributed. The content encryption unit 209 generates a content key from, for example, the exchange key, copy control information of a content, and the like, and encrypts, with the content key, the content to be distributed.

The content distribution unit 210 distributes the encrypted content.

The content distribution measurement unit 211 measures the length of time for which a content is distributed.

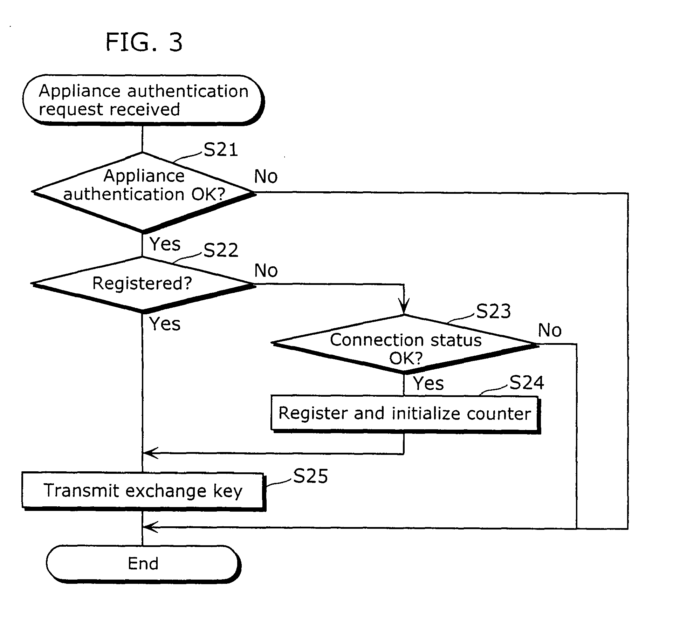

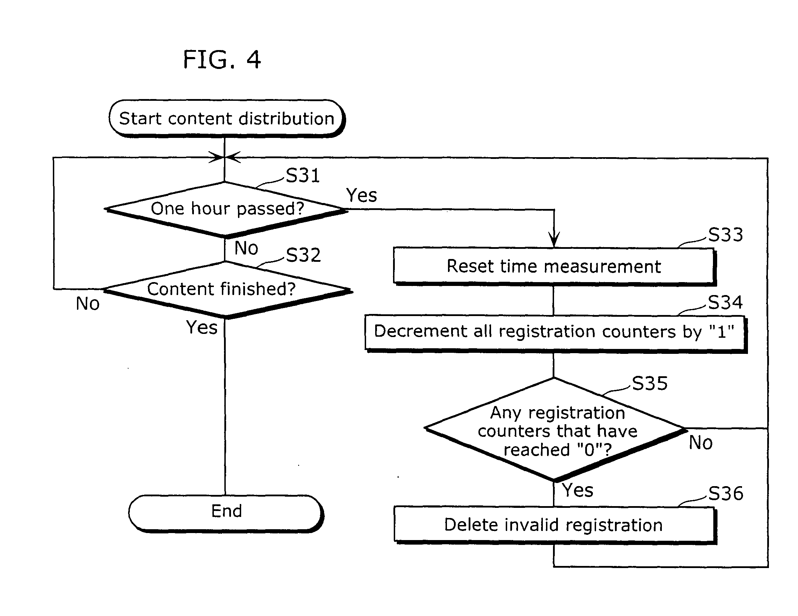

Next, referring to FIGS. 3 and 4, an operation of the transmitter 20 is described. Firstly, a description is provided on procedures up to when the transmitter 20 passes the exchange key to a receiver which has made an authentication request referring to FIGS. 2 and 3.

FIG. 3 shows procedures up to when the transmitter 20 passes the exchange key to a receiver which has made an authentication request.

Step S21 is executed by the appliance authentication unit 201. In this step, it is checked whether or not the receiver which has made an authentication request is a valid appliance by performing appliance authentication of the receiver. The method of the appliance authentication is as described above. Having confirmed that the receiver is a valid appliance, the process proceeds to Step S22, in which it is judged whether or not the appliance is a receiver which has already been registered. In the case where the appliance is not confirmed as a valid appliance, the process ends.

Step S22 is executed by the registration judgment unit 204. In this step, it is judged whether or not the receiver authenticated by the appliance authentication unit 201 as a valid appliance is an appliance which has already been registered. For registration judgment, an appliance-unique identification code obtained in Step S21 is used. In the case where the identification code has been registered, the process proceeds to Step S25 so that the exchange key is transmitted. In the case where the identification code has not been registered, the process proceeds to Step S23 so that RTT verification is performed.

Step S23 is executed by the connection status verification unit 202. In this step, it is judged by performing RTT verification whether or not the connection status of the receiver which has been authenticated by the appliance authentication unit 201 as a valid appliance meets the predetermined condition. The RTT verification is as described above. In the case of confirming that the connection status of the receiver meets the predetermined condition, the process proceeds to Step S24 so that the receiver is registered in the registration information/counter holding unit 203 as a receiver permitted to share the contents. In the case where the connection status of the receiver does not meet the predetermined condition, the process ends.

Step S24 is executed by the registration information/counter changing unit 205. In this step, an identification code is registered in the registration information/counter holding unit 203, the identification code being obtained in Step S21 of the receiver judged by the connection status verification unit 202 that its connection status meets the predetermined condition. Then the counter associated with the receiver is initialized. Subsequently, the process proceeds to Step S25 so that the exchange key is transmitted.

Step S25 is executed by the exchange key transmission unit 206. In this step, the exchange key necessary for decrypting an encrypted content to be distributed is encrypted, using the authentication keys which have been shared in Step S21, and the encrypted exchange key is transmitted to the receiver which has made an authentication request.

With reference to FIGS. 2 and 4, a description is provided on procedures from the start until the end of content distribution by the transmitter 20.

FIG. 4 shows procedures from the start until the end of content distribution by the transmitter 20.

Step S31, Step S32, and Step S33 described below are performed by the content distribution measurement unit 211, whereas Step S34, Step S35, and Step S36 also described below are performed by the registration information/counter changing unit 205.

In Step S31, it is judged whether or not one hour has elapsed after content distribution has started, or after one-hour measurement has been reset. In the case where one hour has not elapsed, the process proceeds to Step S32 so that it is checked whether or not the content has finished. In the case where one hour has elapsed, the process proceeds to Step S33 so that the one-hour measurement is reset.

In Step S32, it is judged whether or not the content has finished. In the case where the content is continuing, the process returns to Step S31 so that it is judged whether or not one hour has elapsed. When the content finishes, the process ends.

In Step S33, the one-hour measurement is reset. Subsequently, the process proceeds to Step S34 so that the counters of all the registered receivers are decremented.

In Step S34, "1" (a value indicating content distribution for one hour is completed) is subtracted (decremented) from the counters (indicating a remaining length of time for which content can be distributed) of all the registered receivers. Subsequently, the process proceeds to Step S35 so that it is checked whether or not there is a registered receiver, the counter value of which has reached "0".

In Step S35, it is checked whether or not there is a counter value of a registered receiver that has reached "0". In the case where there is a counter with the value "0", the process proceeds to Step S36 so that the registration of the receiver is deleted from the registration information/counter holding unit 203. In the case where there is no counter with the value "0", the process returns to Step S31 so that it is further judged whether or not one hour has elapsed.

In Step S36, the identification code of the receiver, the counter value of which has reached "0", is deleted from the registration information/counter holding unit 203, and the registration of the receiver is invalidated. Then the process returns to Step S31 so that it is further judged whether or not one hour has elapsed.

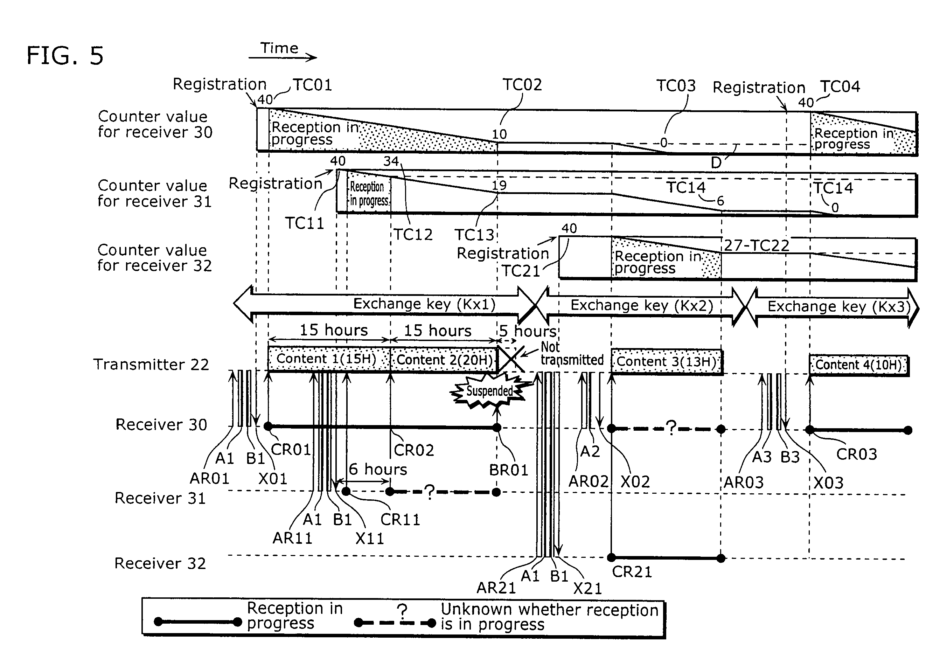

FIG. 5 illustrates an example of changes in counter values held in the transmitter 20 in the first embodiment, the values specifying periods for which the respective receivers can receive contents.

The transmitter 20 respectively distributes a content 1 and a content 2 in response to content distribution requests CR01 and CR02 from the receiver 30. The transmitter 20 then distributes a content 3 in response to a content distribution request CR21 from the receiver 32. Subsequently, the transmitter 20 distributes a content 4 in response to a content distribution request-CR03 from the receiver 30. Further, the receiver 31 requests the transmitter 20 to make simultaneous sharing of the content 1 (CR11) while the transmitter 20 is distributing the content 1 in response to the content distribution request CR01 from the receiver 30.

The length of the content 1 is 15 hours, the length of the content 2 is 20 hours, the length of the content 3 is 13 hours, and the length of the content 4 is 10 hours.

Here, a description is provided on changes in a counter value associated with the receiver 30.

In response to an authentication request AR01 from the receiver 30, the transmitter 20 performs authentication (A1) and RTT verification (B1) so as to judge whether or not the receiver 30 is a valid appliance and is a receiver, the connection status of which meets the predetermined condition. Then the transmitter 20 registers the receiver 30 in the registration information/counter holding unit 203. Here, the counter of the receiver 30 is initialized to "40" (TC01), and an exchange key Kx1 is passed to the receiver 30 (X01).

In response to the distribution request for the content 1 from the receiver 30 (CR01), the transmitter 20 encrypts the content 1 using a content key generated from the exchange key Kx1, and distributes the encrypted content 1. Along with the progress of content distribution, the counter associated with the receiver 30 is decremented. Subsequently, the transmitter 20 receives the distribution request for the content 2 from the receiver 30 (CR02). The transmitter 20 distributes the content 2 after encrypting the content 2 using the content key generated from the exchange key Kx1.

Here, suppose that the receiver 30 suspends the distribution request after receiving the content 2 for 15 hours (BR01). For example, the user of the receiver 30 may have discontinued viewing the content 2 due to an unexpected visitor while viewing the content 2. In such a case, the distribution of the content 2 is suspended, and the value of the counter associated with the receiver 30 stops at "10" (TC02) resulted from decrementing the counter value by the value for only 15 hours of the distribution of the content 2.

After the distribution of the content 2 is suspended, the transmitter 20 performs authentication (A1) and RTT verification (B1) in response to an authentication request AR21 from the receiver 32 so as to judge whether or not the receiver 32 is a valid appliance and is a receiver, the connection status of which meets the predetermined condition. The transmitter then registers the receiver 32, and passes an exchange key Kx2 to the receiver 32 (X21).

On the other hand, suppose, for example, that the receiver 30, after suspending the reception of the content 2, temporarily enters a power-off state, and goes back to a power-on state after a few hours. At this time, the transmitter 20 performs authentication (A2) in response to an authentication request AR02 from the receiver 30, so that the transmitter 20 can confirm that the counter value of the receiver 30 is "10", and that the receiver 30 is a registered receiver having the valid reception period that has not passed. As a result, the transmitter 20 passes the latest exchange key Kx2 to the receiver 30 (X02) without performing RTT verification. Subsequently, in response to the distribution request for the content 3 from the receiver 32 (CR21), the transmitter 20 distributes the content 3 after encrypting the content 3 using the content key generated from the exchange key Kx2.

Here, the content distribution request includes only dynamic information, such as an IP address of a request source. Accordingly, it is difficult for the transmitter 20 to judge which one of the receivers has made a content distribution request. Although content distribution requesting receivers may be identified and managed by the method or the like of adding an identification code used in authentication and registration to a content distribution request, the process would become complex. Furthermore, even if a content distribution requesting receiver is identified, it is not guaranteed that only the content distribution requesting receiver receives a content in the case of content distribution by broadcasting. Even in the case, for example, where the content distribution request CR21 is a distribution request from the receiver 32, and the receiver 30 has not made a distribution request for the content 3 to the transmitter 20, the receiver 30 is able to receive and decrypt the content 3 using the exchange key Kx2 already obtained.

Accordingly, along with the progress in distributing the content 3, the transmitter 20 decrements not only the counter of the receiver 32, but also the counter of the receiver 30, regardless of whether or not the receiver 30 is receiving the content 3. At the point in time when the counter value of the receiver 30 reaches "0" (TC03), the registration which permits the receiver 30 to share contents is deleted from the registration information/counter holding unit 203.

Subsequently, in response to an authentication request AR03 from the receiver 30, the transmitter 20 performs both authentication (A3) and RTT verification (B3) since the registration of the receiver 30 does not exist. As a result of the authentication and the RTT verification, the transmitter 20 judges that the receiver 30 is a valid appliance and is a receiver, the connection status of which meets the predetermined condition, and then registers the receiver 30. Here, the counter of the receiver 30 is initialized to "40" (TC04), and the latest exchange key Kx3 is passed to the receiver 30 (X03).

Here, suppose that at the time of distributing the above-mentioned content 3, the transmitter 20 identifies that the content distribution request CR21 is a distribution request from the receiver 32 by some method, and maintains the registration of the receiver 30 at the point in time when receiving the authentication request AR03 without decrementing the counter of the receiver 30 (a dotted line D indicating the counter value associated with the receiver 30 shown in FIG. 5). In such a case, if the receiver 30 has received the distribution of the content 3, and has decrypted the received content 3, it would mean that the transmitter 20 would perform only authentication (A3) of the receiver 30 without performing RTT verification (B3) in response to the authentication request AR03 from the receiver 30 and would pass the latest exchange key Kx3 to the receiver 30 in spite that the transmitter 20 has distributed contents for 43 hours to the receiver 30, exceeding the valid reception period of 40 hours.

The receiver 30 is also able to fraudulently receive and decrypt a content for a longer time than the permitted valid reception period even in the following case or the like: the receiver 30 is taken out of the home before making the distribution request for the content 4 (CR03), and is determined by the RTT verification as not meeting the predetermined condition at the point in time when the receiver 30 makes the authentication request AR03.

Next, a description is provided on changes in a counter value associated with the receiver 31.

While distributing the content 1 in response to the content distribution request (CR01) from the receiver 30, the transmitter 20 performs authentication (A1) and RTT verification (B1) in response to an authentication request AR11 from the receiver 31. As a result of the authentication and the RTT verification, the transmitter 20 judges that the receiver 31 is a valid appliance and is a receiver, the connection status of which meets the predetermined condition, and then registers the receiver 31. Here, the counter of the receiver 31 is initialized to "40" (TC11), and the exchange key Kx1 is passed to the receiver 31 (X11). Then, along with the progress in distributing the content 1, the counter associated with the receiver 31 is decremented regardless of whether or not there has been a content distribution request CR11 from the receiver 31. Consequently, when the distribution of the content 1 is completed, the counter value associated with the receiver 31 becomes "34" (TC12).

Next, in response to the distribution request CR02 from the receiver 30, the transmitter 20 decrements the counter of the receiver 31 along with the progress in distributing the content 2, regardless of whether or not the receiver 31 is receiving the content. Since the distribution of the content 2 is suspended by the receiver 30, the counter value associated with the receiver 31 stops at "19" (TC13) resulted from decrementing the counter value by the value for only 15 hours for which the content 2 has been distributed. Subsequently, the transmitter 20 distributes the content 3 in response to the content distribution request CR21 from the receiver 32, and distributes the content 4 in response to the content distribution request CR03 from the receiver 30. Along with the progress in distributing these contents, the transmitter 20 decrements the counter associated with the receiver 31. The counter value associated with the receiver 31 becomes "6" (TC14) when the distribution of the 13 hour-long content 3 is completed, and becomes "0" (TC15) during the distribution of the content 4.

Next, a description is provided on changes in a counter value associated with the receiver 32.

In response to the authentication request AR21 from the receiver 32, the transmitter 20 performs the authentication (A1) and the RTT verification (B1). As a result of the authentication and the RTT verification, the transmitter 20 judges that the receiver 32 is a valid appliance and is a receiver, the connection status of which meets the predetermined condition, and then registers the receiver 32. Here, the counter of the receiver 32 is initialized to "40" (TC21), and the transmitter 20 passes the exchange key Kx2 to the receiver 32.

In response to the content distribution request (CR21) for the content 3 from the receiver 32, the transmitter 20 encrypts the content 3 with the content key generated from the exchange key Kx2 and distributes the encrypted content 3. Along with the progress in distributing the content 3, the counter associated with the receiver 32 is decremented. When the distribution of the 13 hour-long content 3 is completed, the counter value associated with the receiver 32 becomes "27" (TC22). Subsequently, in response to the content distribution request CR03 from the receiver 30, the transmitter 20 distributes the content 4, and decrements the counter associated with the receiver 32.

Accordingly, the management of the content distribution is facilitated, since the transmitter 20 collectively manages content distribution statuses of the receivers without having to be aware of the distribution status of each receiver individually. At the same time, unlimited sharing of the contents is reliably prevented. Moreover, by skipping the time-consuming judging process of judging a connection status of a receiver in a registered status, it is possible to achieve both security protection of contents and a reduction in load in a process of judging whether or not receivers are to be permitted to share contents.

Also, counters which specify periods of time for which receivers can receive contents are individually initialized to the predetermined value at the point in time when the transmitter 20 registers the respective receivers. Therefore, the case is prevented where the initial value of a receiver is dynamically shortened due to, for example, an influence of the distribution status prior to the registration of the receiver. Accordingly, the frequency of obtaining permission from the transmitter 20 is reduced. In addition, the counters are decremented only by the length of time for which the transmitter 20 distributes a content. Therefore, after the receiver is given permission to share contents, even a blank time caused by the user having to suspend the viewing of the content in mid-flow (for example, by an unexpected visitor) is not consumed. Consequently, the frequency of obtaining permission again from the transmitter 20 is reduced.

Note that in the first embodiment, although the description is provided on the situation where the transmitter 20 performs streaming distribution of contents in real time, the present invention is not limited to this. For example, the present invention may also be applied to non-real time distribution where contents stored in the transmitter 20 are downloaded using a HTTP protocol by each receiver for sharing. In non-real time distribution, it is assumed that a two hour-long content can be distributed in one hour. In such a case, it is clear that a counter which specifies a valid reception period may be decremented by the length of time for which the content is reproduced (two hours) instead of the length of time for which the content is distributed (one hour).

Also, in the first embodiment, the description has been provided with the assumption that the content distribution management device is implemented in the transmitter 20. However, the content distribution management device may be provided separately from the transmitter 20. Note that, the registration information/counter changing unit 205 is an example of a setting unit, a management unit, and a registration unit of the content distribution management device of the present invention.

### (Second Embodiment)

In a second embodiment, a description is provided on points which are different from the first embodiment.

In the second embodiment, the transmitter 20 manages the content distribution statuses of all the registered receivers using only one counter to measure the periods for which the receivers permitted to share contents can receive contents. In response to an authentication request from a receiver, the transmitter 20 performs authentication and RTT verification of the receiver. In the case of judging that the receiver can be permitted to share contents, the transmitter 20 registers the receiver as a permitted receiver. At the point in time when the transmitter 20 registers one receiver, the transmitter 20 sets a common counter with a maximum period for which all the receivers can receive contents (a valid reception period). In other words, the transmitter 20 initializes the common counter for all the registered receivers. At the point in time when it is measured that the predetermined valid reception period has passed, the registration of all the registered receivers is deleted from the transmitter 20. The counter is decremented during the time the transmitter 20 distributes a content. More specifically, the counter is decremented when a content is distributed to any of the registered receivers.

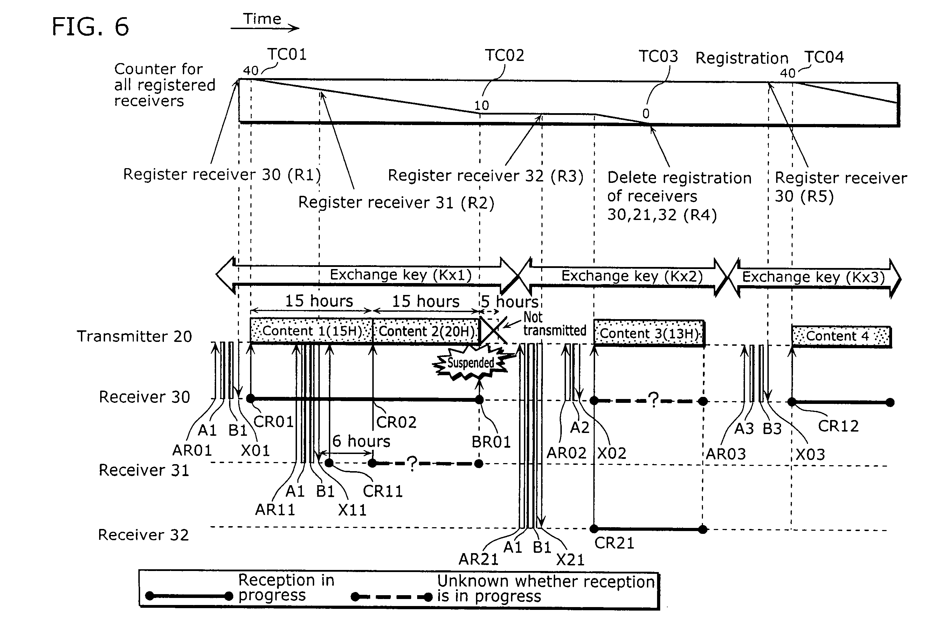

FIG. 6 shows changes in a value of the counter held in the transmitter 20 of the second embodiment, and which specifies a period for which each receiver can receive contents.

Operations of the receivers 30, 31, and 32 are the same as those shown in FIG. 5 in the aforementioned first embodiment.

In response to the authentication request AR01 from the receiver 30, the transmitter 20 performs the authentication (A1) and the RTT verification (B1). As a result of the authentication and the RTT verification, the transmitter 20 judges that the receiver 30 is a valid appliance, and is a receiver, the connection status of which meets the predetermined condition, and then registers the receiver 30 (R1). Here, the counter is initialized to "40" (TC01), and the exchange key Kx1 is passed to the receiver 30 (X01). In response to the distribution request for the content 1 from the receiver 30 (CR01), the transmitter 20 encrypts the content 1 with the content key generated from the exchange key Kx1, and distributes the encrypted content 1. Along with the progress of the content distribution, the counter is decremented.

In the mid-flow of the distribution of the content 1, the transmitter 20 performs the authentication (A1) and the RTT verification (B1) in response to the authentication request AR11 from the receiver 31. As a result of the authentication and the RTT verification, the transmitter 20 judges that the receiver 31 is a valid appliance, and is a receiver, the connection status of which meets the predetermined condition, and then registers the receiver 31 (R2). Subsequently, the receiver 30 makes the distribution request for the content 2 (CR02). The transmitter 20 encrypts the content 2 with the content key generated from the exchange key Kx1, and distributes the encrypted content 2. Here, when the receiver 30 suspends the distribution request after receiving the content 2 for 15 hours, the distribution of the content 2 is suspended, and the counter value stops at "10" (TC02) resulted from decrementing the counter value by the value for only 15 hours for which the content 2 has been distributed.

After the receiver 30 has suspended the distribution of the content 2, the transmitter performs the authentication and the RTT verification in response to the authentication request AR21 from the receiver 32. As a result of the authentication and the RTT verification, the transmitter 20 judges that the receiver 32 is a valid appliance, and is a receiver, the connection status of which meets the predetermined condition, registers the receiver 32 (R3), and passes the exchange key Kx2 to the registered receiver 32.

Meanwhile, here, the transmitter 20 performs the authentication (A2) in response to the authentication request AR02 from the receiver 30. However, since the counter value of the receiver 30 is "10", and the registration of the receiver 30 exists, the transmitter 20 passes the latest exchange key Kx2 to the receiver 30 (X02) without performing RTT verification. Subsequently, in response to the distribution request for the content 3 from the receiver 32 (CR21), the transmitter 20 encrypts the content 3 with the content key generated from the exchange key Kx2, and distributes the encrypted content 3. Along with the progress in distributing the content 3, the transmitter 20 decrements the counter. At the point in time when the counter value reaches "0" (TC03), the registration which permits all the registered receivers (receivers 30, 31, and 32) to share contents is deleted.

Subsequently, in response to the authentication request AR03 from the receiver 30, the transmitter 20 performs both the authentication (A3) and the RTT verification (B3) since the receiver 30 is not registered in the registration information/counter holding unit 203. As a result of the authentication and the RTT verification, the transmitter 20 judges that the receiver 30 is a valid appliance, and is a receiver, the connection status of which meets the predetermined condition, and then registers the receiver 30. Here, the counter is initialized to "40" (TC04), and the latest exchange key Kx3 is passed to the receiver 30 (X03).

Accordingly, it is clear that unlimited sharing of contents can reliably be prevented, that the transmitter 20 can manage the content distribution with few resources, and that the implementation of the content distribution management is facilitated.

Note that in the embodiments, RTT verification is used to verify whether or not the connection status between the transmitter and the receiver which has made an authentication request meets the predetermined condition. Verification of whether or not the connection status meets the predetermined condition may also be performed using Time To Live.

### Industrial Applicability

The content distribution management device of the present invention is useful as a transmitter or the like which distributes, on a network, contents to receivers which share contents for a predetermined period, and manages the distribution of the contents.

## Claims

1. A content distribution management device that manages content distribution in the case where a transmitter distributes a content to a plurality of receivers, said content distribution management device comprising:
a setting unit operable to set, in a holding unit, a valid reception period which is a maximum length of time for which the receivers can receive the content, the receivers being permitted to share the content; and
a management unit operable to manage, in accordance with a status of distribution of the content from the transmitter, a length of time for which all the receivers permitted to share the content can receive the content.

2. The content distribution management device according to Claim 1,
wherein a unique identifier is assigned to each of the receivers, and
said content distribution management device further comprises
a registration unit operable to store, in the holding unit, the identifier of each of the receivers permitted to share the content which the transmitter distributes,
wherein said setting unit is operable to set the valid reception period in the holding unit in the case where said registration unit has stored the identifier of each of the receivers in the holding unit, and
said management unit is operable to delete the identifier registered in the holding unit in the case where a length of time for which the content is distributed has reached the end of the valid reception period after the valid reception period has been set in the holding unit, the content being distributed by the transmitter.

3. The content distribution management device according to Claim 1,
wherein the length of time for which distribution is performed is an actual length of time for which the transmitter distributes the content, and
said management unit is operable to reduce, from the length of time for which the receivers can receive the content, the actual length of time for which the transmitter distributes the content.

4. The content distribution management device according to Claim 1,
wherein the length of time for which distribution is performed is a length of time for which the content is reproduced, the content being distributed by the transmitter, and
said management unit is operable to reduce, from the length of time for which the receivers can receive the content, the length of time for which the content is reproduced, the content being distributed by the transmitter.

5. The content distribution management device according to Claim 1,
wherein the transmitter distributes the content in an encrypted form,
each of the receivers permitted to share the content is a receiver, a connection status of which meets a predetermined relationship with the transmitter,
said setting unit is operable to set, in the holding unit, the identifier of each of the receivers, the connection status of which meets the predetermined relationship with the transmitter, and
the transmitter transmits, to each of the receivers associated with the identifier, information necessary for decrypting the encrypted content after the identifier has been set in the holding unit.

6. A content distribution management device that manages content distribution in the case where a transmitter distributes a content to one or more receivers,
wherein a unique identifier is assigned to each of the one or more receivers, and
said device comprises:
a registration unit operable to store, in a holding unit, the identifier of each of the one or more receivers permitted to share the content included in the transmitter;
a setting unit operable to set, in the holding unit, a valid reception period which is a maximum length of time for which the one or more receivers can receive the content in the case where said registration unit has stored, in the holding unit, the identifier of each of the one or more receivers; and
a management unit operable to delete the identifier registered in the holding unit in the case where a length of time for which the content is distributed has reached the end of the valid reception period after the valid reception period has been set in the holding unit, the content being distributed by the transmitter.

7. The content distribution management device according to Claim 6,
wherein the length of time for which distribution is performed is an actual length of time for which the transmitter distributes the content, and
said management unit is operable to reduce, from the length of time for which the one or more receivers can receive the content, the actual length of time for which the transmitter distributes the content.

8. The content distribution management device according to Claim 6,
wherein the length of time for which distribution is performed is a length of time for which the content is reproduced, the content being distributed by the transmitter, and
said management unit is operable to reduce, from the length of time for which the one or more receivers can receive the content, the length of time for which the content is reproduced, the content being distributed by the transmitter.

9. The content distribution management device according to Claim 6,
wherein the transmitter distributes the content in an encrypted form,
each of the one or more receivers permitted to share the content is a receiver, a connection status of which meets a predetermined relationship with the transmitter,
said setting unit is operable to set, in the holding unit, the identifier of each of the one or more receivers, the connection status of which meets the predetermined relationship with the transmitter, and
the transmitter transmits, to each of the one or more receivers associated with the identifier, information necessary for decrypting the encrypted content after the identifier has been set in the holding unit.

10. A content distribution management method used for managing content distribution in the case where a transmitter distributes a content to a plurality of receivers, said content distribution management method comprising:
a setting step of setting, in a holding unit, a valid reception period which is a maximum length of time for which the receivers can receive the content, the receivers being permitted to share the content; and
a management step of managing, in accordance with a status of distribution of the content from the transmitter, a length of time for which all the receivers permitted to share the content can receive the content.

11. A content distribution management method used for managing content distribution in the case where a transmitter distributes a content to one or more receivers,
wherein a unique identifier is assigned to each of the one or more receivers, and
said method comprises:
a registration step of storing, in a holding unit, the identifier of each of the one or more receivers permitted to share the content included in the transmitter;
a setting step of setting, in the holding unit, a valid reception period which is a maximum length of time for which the one or more receivers can receive the content in the case where, in said registration step, the identifier of each of the one or more receivers has been stored in the holding unit; and
a management step of deleting the identifier registered in the holding unit in the case where a length of time for which the content is distributed has reached the end of the valid reception period after the valid reception period has been set in the holding unit, the content being distributed by the transmitter.
